# EUROPEAN PATENT APPLICATION

(11) **EP 2 020 372 A2**
(43) Date of publication of application: **04.02.2009**
(21) Application number: 08013791.2
(22) Date of filing: 31.07.2008
(51) Int. Cl.: B62K 23/08, B62M 25/06

(54) **Straddle-type vehicle**

(30) Priority: 31.07.2007 JP 2007199610
(71) Applicant: Yamaha Hatsudoki Kabushiki Kaisha, Iwata-shi, Shizuoka-ken 438-8501 (JP)
(72) Inventor: Suzuki, Masaya, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a straddle-type vehicle comprising a footrest (17a), on which a driver can put at least a portion of a sole, and an operating pedal (19) vertically swingable about a rotating shaft (18) extending in width direction of the straddle-type vehicle, the operating pedal (19) comprising at least one pedal body (19b,19c) connected to the rotating shaft (18) and at least one operating portion (20,21) on which the driver can apply a treading operation when putting the sole on the footrest (17a), the operating portion (20,21) being arranged substantially at a swingable end of the pedal body (19b,19c), wherein the operating portion (20,21) includes a substantially upwardly projecting tread surface (20a,21a).

## Description

The present invention relates to a straddle-type vehicle, such as motorcycle, etc., provided with, for example, a tread-type shift device constructed so that a driver treads on and operates an operating portion of an operating pedal in a state, in which the sole is put on a footrest.

Tread-type shift devices are generally constructed such that the neighbor of the bases of toes of the sole treads on a front operating portion formed at, for example, a front end of a shift pedal and the neighbor of the heel treads on a rear operating portion formed at a rear end of the shift pedal whereby speed change is performed. The shift device of this kind is proposed, in which a shift pedal is arranged above a floor plate and inward in a vehicle width direction, a center of the shift pedal in a longitudinal direction is journaled to enable a front end and a rear end thereof to swing vertically, and tread surfaces of a front operating portion and a rear operating portion of the shift pedal are formed flat, as disclosed in JP-A-2000-344178.

By the way, in the case where a shift operation is performed in the shift device described in the document described above, a driver is required to move a foot onto the operating portion of the shift pedal from the floor plate to perform a treading operation, so that there is caused a problem that the shift operation is troublesome.

On the other hand, there are also known shift devices constructed so that an operating portion of a shift pedal is trod downward in a state, in which a foot is put on a footrest provided in the vicinity of a center of the shift pedal in a longitudinal direction.

The shift devices eliminates the necessity of moving a foot, so that a shift operation is simple correspondingly. However, there is caused a problem that dispersion is liable to generate in feeling of operation in the shift operation. This is thought to be attributable to the following reason. In the case where the neighbor of the arch of the sole is put on a footrest and a treading operation is performed with the arch as a fulcrum, for example, a point, at which the sole and an operating portion abut against each other, moves from the neighbor of the bases of toes of the sole to a region behind it in some cases depending upon a size of a driver's footwear and foot, a method of operation, etc., as a tread angle increases. In such case, a lever ratio becomes gradually small and so it is thought that a force required for the treading operation is gradually increased and generates dispersion in feeling of operation.

The invention has been thought of in view of the conventional situation described above.

It is an objective of the present invention to provide a straddle-type vehicle, which is simple in construction to enable suppressing of dispersion in feeling of operation and stabilizing of the feeling of operation.

According to the present invention, said objective is solved by a straddle-type vehicle comprising a footrest, on which a driver can put at least a portion of a sole, and an operating pedal vertically swingable about a rotating shaft extending in width direction of the straddle-type vehicle, the operating pedal comprising at least one pedal body connected to the rotating shaft and at least one operating portion on which the driver can apply a treading operation when putting the sole on the footrest, the operating portion being arranged substantially at a swingable end of the pedal body, wherein the operating portion includes a substantially upwardly projecting tread surface.

It has been found out that if a tread surface of an operating portion is formed flat, it considerably acts on bringing about of a change in a point, at which the sole and an operating portion abut against each other. According to the invention, since the tread surface of the operating portion is formed to project upward, desirably to be made upwardly convexly circular, a change in a point, at which the sole and an operating portion abut against each other, with an increase in tread angle, is restricted as compared with the case where a tread surface is flat, with the result that a change in a necessary operating force becomes small, and so it is possible to improve a feeling of operation. Incidentally, in the case where a tread surface is flat, a point, at which the sole and an operating portion abut against each other, is moved to the neighbor of a rear edge of the tread surface from the neighbor of a front edge thereof. On the other hand, in the case where a tread surface projects upward, desirably in the case where it is circular, the point is changed slightly toward the rear from the neighbor of a circular apex.

Preferably, the tread surface has a cross sectional shape which is substantially upwardly convex when being viewed in axial direction of the rotating shaft.

Further, preferably the tread surface has an upper portion which is substantially semi-circular.

Still further, preferably the tread surface includes a plurality of substantially semi-circular portions, preferably having different radii of curvature.

Yet further still, preferably the tread surface includes an uppermost projecting apex which is arranged substantially centrally on the tread surface in longitudinal direction of the straddle-type vehicle.

Preferably, the operating portion includes at least one longitudinal wall portion which, preferably, extends downward from an outer edge of the tread surface.

Further, preferably, the tread surface and the longitudinal wall portion are formed integrally, preferably, by press-forming a sheet material.

According to a preferred embodiment, the pedal body comprises a front pedal body extending forward from the rotating shaft in longitudinal direction of the straddle-type vehicle and a rear pedal body extending rearward from the rotating shaft in longitudinal direction of the straddle-type vehicle, the front pedal body having a front operating portion, and the rear pedal body having a rear operating portion, wherein at least one of the front operating portion and the rear operating portion includes the upwardly projecting tread surface.

Preferably, the operating pedal is a shift pedal configured to perform a gear change.

Further, preferably the front operating portion and the rear operating portion, respectively, include a front tread surface and a rear tread surface, which project upward.

Still further, preferably the rear tread surface is positioned above the front tread surface when the operating pedal is disposed in a standby position before the treading operation is performed.

Yet further still, preferably the rear tread surface is inclined rearward and obliquely upward with respect to the front tread surface when the operating pedal is disposed in a standby position before the treading operation is performed.

Preferably, the front pedal body and/or the rear pedal body is/are bent outwardly with regard to the rotating shaft in width direction of the straddle-type vehicle.

Further, preferably the rear operating portion has substantially the same shape as the front operating portion.

Still further, preferably the tread surface, preferably the front tread surface, is positioned at the same height or below the footrest when the operating pedal is disposed in a standby position before the treading operation is performed.

In the following, the present invention is explained in greater detail by means of embodiments thereof in conjunction with the accompanying drawings, wherein:
- Fig. 1: is a left side view showing a motorcycle according to an embodiment;
- Fig. 2: is a left side view showing a shift device of the motorcycle;
- Fig. 3: is a plan view showing the shift device; and
- Fig. 4: is a perspective view showing a bottom surface of an engine unit provided with the shift device.

Among others, the following reference signs are used in the figures:
1: motorcycle (straddle-type vehicle)
17a: footrest
18: transmission shaft (rotating shaft)
19: shift pedal (operating pedal)
19b, 19c: front and rear pedal bodies
20: front operating portion
20a: front tread surface
20a': apex
20b: longitudinal wall portion
21: rear operating portion
21a: rear tread surface
21a': apex
21b: longitudinal wall portion
a: axial direction of rotating shaft

An embodiment of the invention will be described below with reference to the accompanying drawings.

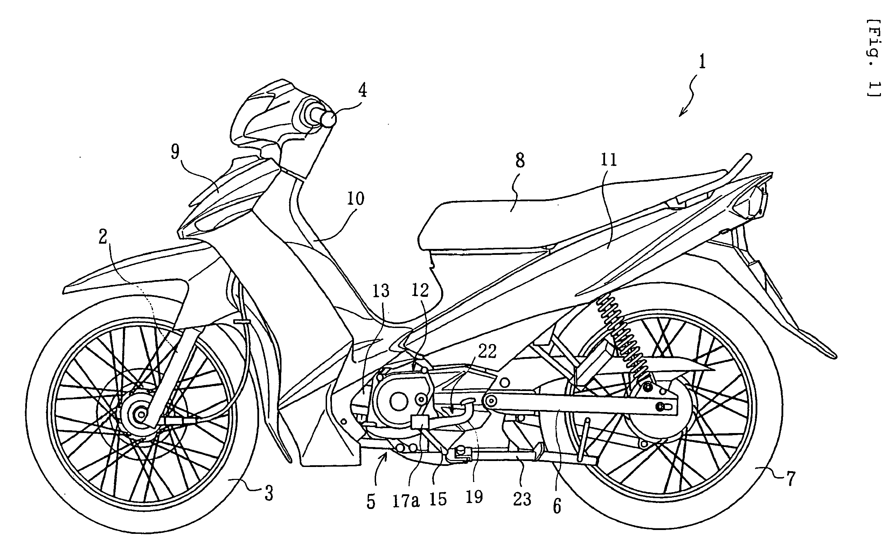

Figs. 1 to 4 are views illustrating a motorcycle according to an embodiment. In addition, front and rear, and left and right referred to in descriptions of the embodiment mean front and rear, and left and right as seen in a state of being seated on a seat unless, otherwise specified.

In the drawings, the reference numeral 1 denotes a motorcycle as an example of a so-called straddle-type vehicle, which permits riding and straddling on a straddle-shaped seat. In general, a straddle-type vehicle has a body frame and a seat on which a rider can be seated straddling the body frame when being seated. The motorcycle 1 has the following outline construction. An underbone type body frame (not shown) has a front fork 2 journaled at a front end thereof to make the same steerable left and right, has a front wheel 3 journaled at a lower end thereof, and has a steering handle 4 fixed at an upper end thereof. An engine unit 5 is suspended from and supported on a central portion of the body frame and a rear arm 6 is supported in the vicinity of a rear edge of the engine unit 5 to be able to swing vertically. Also, a double-ride seat 8 is mounted rearwardly upwardly of the body frame. Furthermore, peripheries of the front fork 2 and the steering handle 4 are surrounded by a front cover 9 and a leg shield 10, and a lower periphery of the seat 8 is surrounded by a side cover 11.

The engine unit 5 comprises a crank case 12, in which a crank shaft and a transmission mechanism are accommodated, and an engine body 13 including a cylinder body 13a connected to a front wall of the crank case 12, a cylinder head 13b, etc.

A brake pedal 14 of a rear brake device is arranged on the right of the engine unit 5. The brake pedal 14 includes a brake pedal body 14a extending in a longitudinal direction of a vehicle and an operating portion 14b formed at a tip end thereof. A boss portion 14c formed at a base end of the brake pedal body 14a is supported by a support shaft 14d, which is fixed to the body frame and directed in a vehicle width direction, to be able to swing vertically. In addition, while not shown, a lever portion formed on the boss portion 14c is connected to a brake drum of a rear wheel 7 by a brake cable or a brake rod and a treading operation of the operating portion 14b brakes the rear wheel 7.

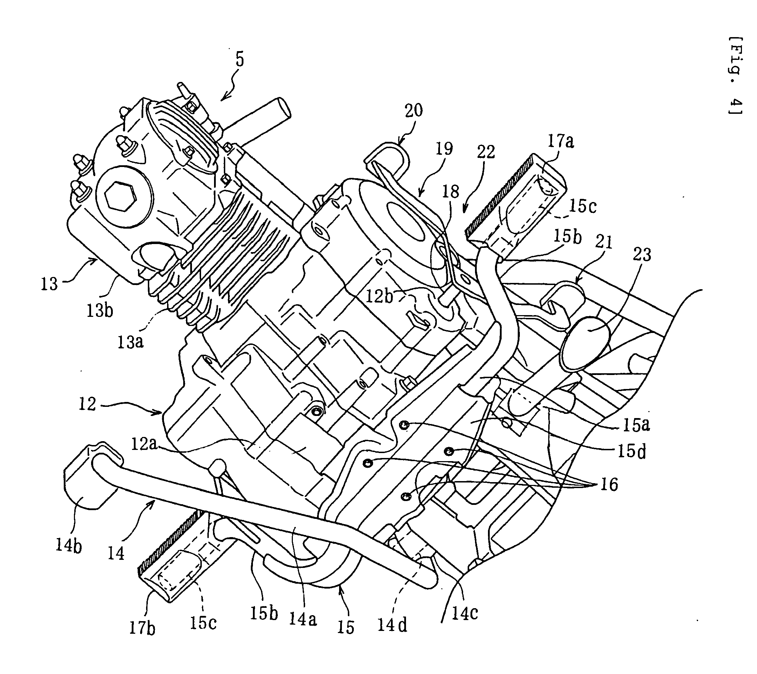

Also, a bracket plate 15d of a footrest bracket 15 is clamped and fixed to a bottom surface 12a of the crank case 12 by bolts 16. The footrest bracket 15 includes a base portion 15a extending along the bottom surface 12a of the crank case 12 in the vehicle width direction, leg portions 15b, 15b rising upward from both ends of the base portion 15a, and holding portions 15c bent horizontally from the respective leg portions 15b. In addition, the bracket plate 15d is arranged to cover the base portion 15a and welded and fixed thereto. Also, the reference numeral 23 denotes a side stand supported on the footrest bracket 15 to be able to swing between a use position shown in Fig. 4 and a storage position shown in Fig. 1.

Left and right footrests 17a, 17b are fitted onto and fixed to the left and right holding portions 15c of the footrest bracket 15. The footrests 17a, 17b are formed from an elastic member such as rubber and formed therein with a slit 17c for improvement of cushioning quality. The positioning relationship between the right footrest 17b and the operating portion 14b of the brake pedal 14 is set so that a driver can readily and surely perform the treading operation on the operating portion 14b in a state, in which a rider puts a sole on the right footrest 17b.

A transmission shaft 18 as rotating shaft of the transmission mechanism arranged in the crank case 12 projects outside from a left side wall 12b of the crank case 12. Spline-fitted onto a projection 18a of the transmission shaft 18 is a boss 19a of a shift pedal 19 as operating pedal of a shift device 22 for gearshift of the transmission mechanism. Accordingly, the shift pedal 19 together with the transmission shaft 18 can swing vertically about an axis a of rotation thereof.

The shift pedal 19 includes a front pedal body 19b extending forward from the boss 19a and a rear pedal body 19c extending rearward. A front operating portion 20 is fixed to a front end of the front pedal body 19b by means of welding or the like and a rear operating portion 21 is fixed to a rear end of the rear pedal body 19c by means of welding or the like. The front and rear pedal bodies 19b, 19c, which constitute the shift pedal 19, and the front and rear operating portions 20, 21 are formed of iron sheet and have surfaces thereof subjected to plating.

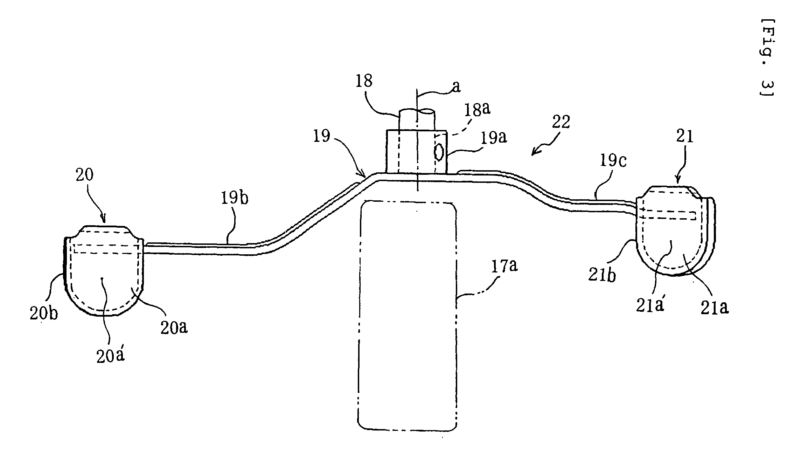

As viewed from above (see Fig. 3), the left footrest 17a is arranged so that a position thereof in the longitudinal direction of a vehicle substantially agrees with that of the boss 19a. Also, the front pedal body 19b and the rear pedal body 19c are bent outwardly of the boss 19a in the vehicle width direction and further bent forward and rearward. Such bending avoids interference with the concave and convex shape of the left side wall 12b of the crank case 12.

The front operating portion 20 includes a front tread surface 20a, against which a driver's sole abuts, and a longitudinal wall portion 20b formed by bending an outer edge of the front tread surface 20a downward, and is formed integrally by press-forming a sheet material.

The front tread surface 20a projects upward. Detailedly, the front tread surface 20a defines a substantially circular shape, in particular a semi-circular upper portion, having a radius R of curvature as viewed from the side of a vehicle in a plane perpendicular to the axis a of rotation of the transmission shaft 18 and the longitudinal wall portion 20b is bent from the front tread surface 20a to define a smooth, curved surface. The front tread surface 20a has an uppermost projecting apex 20a' centrally in the longitudinal direction of a vehicle.

The rear operating portion 21 has a substantially same shape as the front operating portion 20, and includes a rear tread surface 21 a, against which a driver's sole abuts, and a longitudinal wall portion 21 b formed by bending an outer edge of the rear tread surface 21a downward. The rear tread surface 21a specifically defines a substantially circular shape, in particular a semi-circular upper portion, having a radius R of curvature and the longitudinal wall portion 21 b is bent from the rear tread surface 21 a to define a smooth, curved surface. The rear tread surface 21a has an uppermost projecting apex 21 a' centrally in the longitudinal direction of a vehicle.

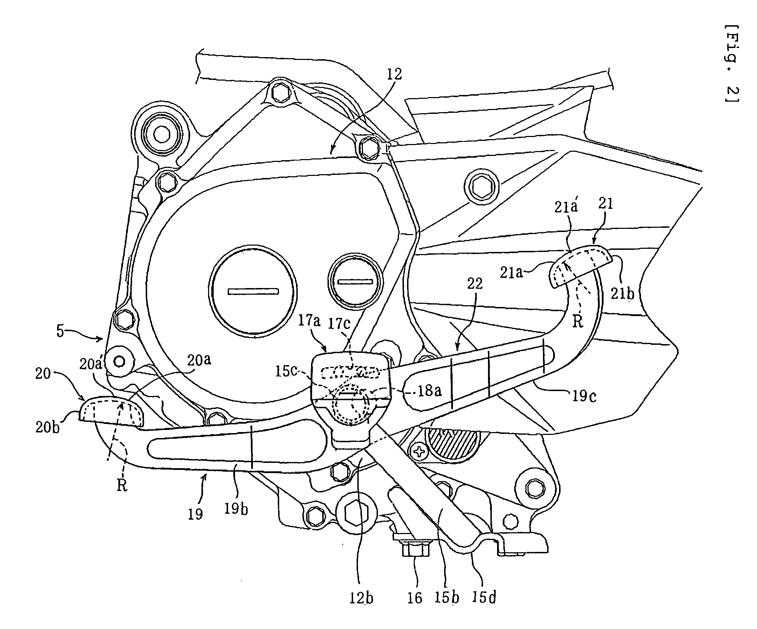

As viewed from the side of a vehicle (see Fig. 2), the footrest 17a is arranged so that an upper surface thereof is positioned a little above the transmission shaft 18. Also, when the shift pedal 19 is in a standby position before the treading operation is performed, the rear operating portion 21 is positioned above the upper surface of the footrest 17a and the front operating portion 20 is positioned therebelow. Furthermore, when being in the standby position, the rear tread surface 21a of the rear operating portion 21 is inclined considerably rearward and obliquely upward from the front tread surface 20a of the front operating portion 20. In addition, the front tread surface 20a is inclined slightly forward and obliquely upward. In particular, the front tread surface 20a is positioned at the same height or below the footrest 17a, respectively its upper surface, when the shift pedal 19 is in its standby position.

With the shift device 22 according to the embodiment, the shift operation is generally performed such that in a state, in which a driver puts the neighbor of the arch of the sole on the footrest 17a, the neighbor of the bases of toes of the sole treads on the front tread surface 20a of the front operating portion 20, or the neighbor of the heel treads on the rear tread surface 21 a of the rear operating portion 21. When the tread angle exceeds a predetermined value, the transmission mechanism is switched over to an adjacent speed change stage.

According to the embodiment, the front tread surface 20a and the rear tread surface 21 a are formed to define an upwardly convex, circular, respectively semi-circular shape. Therefore, a change in a point, at which the sole and the tread abut against each other, with an increase in tread angle, is limited to a change around an apex of the arc and is restricted as compared with the case where a conventional tread surface is flat. Consequently, a distance (lever ratio) from a point, at which the sole is put on the footrest, to a point, at which it abuts against the tread surface, becomes small in change, and hence a necessary operating force (shift load) becomes small in change, so that it is possible to improve a feeling of operation. Also, since the operation can be performed at the same lever ratio, the tread angle (stroke) amounts to the same level at all times, in which it is possible to improve a feeling of operation.

Also, since the front tread surface 20a and the rear tread surface 21a are circular, respectively semi-circular in shape, a bearing stress between footwear and the tread surface in operation is increased and a bottom surface of the footwear is a little flexed, so that it is possible to obtain a soft feeling of operation.

Since the front operating portion 20 includes the circular, front tread surface 20a and the longitudinal wall portion 20b and the rear operating portion 21 includes the circular, rear tread surface 21 a and the longitudinal wall portion 21 b, it is possible to increase the front operating portion 20 and the rear operating portion 21 in stiffness to make the both operating portions relatively thin in wall thickness. Consequently, it is possible to achieve lightening and to achieve an increase in workability at the time of press-forming.

Also, since the rear tread surface 21 a is positioned above the front tread surface 20a and inclined rearward and obliquely upward from the front tread surface 20a, an operation, in which the neighbor of the heel of the sole treads on the rear tread surface 21a, is especially made easy to lead to an improvement in shift operability.

While the embodiment has described the case where the front tread surface 20a and the rear tread surface 21 a defines a substantially circular, respectively semi-circular shape having the uniform radius R of curvature, the tread surface may comprise a combination of circular surfaces having a plurality of different radii of curvature. For example, radii of curvature of front and rear ends of the tread surface in the longitudinal direction of a vehicle may be set to be smaller than a radius of curvature of a central portion thereof in the longitudinal direction of a vehicle, or set vice versa.

Also, while the shift pedal 19 in the embodiment is formed of iron, surfaces of which are subjected to plating, it may use other materials such as stainless steel, aluminum.

Also, while the whole shift pedal 19 including the front and rear pedal bodies 19b, 19c and the front and rear operating portions 20, 21 is formed from iron, a part thereof may be formed from other materials. For example, the front and rear tread surfaces 20a, 21 a (or a part thereof), which constitute the front and rear operating portions 20, 21, may be formed from rubber, or the like.

Also, while the embodiment has been described taking, as an example, a shift device for switchover of speed change stages of the transmission mechanism, the teaching is applicable to any one, in which foot is put on a footrest to perform a treading operation, and also to a tread surface of the operating portion 14b of the brake pedal 14, which constitutes the brake device.

The description above discloses (among others) an embodiment of a straddle-type vehicle comprising a footrest, on which a driver puts the sole, and an operating pedal arranged to be able to swing vertically about a rotating shaft extending in a vehicle width direction, and wherein the operating pedal comprises a pedal body connected to the rotating shaft, and an operating portion, which is formed at a swinging end of the pedal body and on which a driver applies a treading operation in a state of putting the sole on the footrest, and the operating portion includes an upwardly projecting tread surface.

Preferably, the tread surface is formed to be upwardly convex in cross sectional shape perpendicular to an axial direction of the rotating shaft.

Further, preferably the tread surface is upwardly convexly circular.

Still further, preferably the tread surface includes a plurality of circular portions having different radii of curvature.

Preferably, the tread surface includes an uppermost projecting apex centrally of the tread surface in a longitudinal direction of a vehicle.

Further, preferably the operating portion includes an upwardly projecting tread surface and a longitudinal wall portion formed and bent downward from an outer edge of the tread surface.

Still further, preferably the tread surface and the longitudinal wall portion of the operating portion are formed integrally by press-forming a sheet material.

Preferably, the operating pedal comprises a shift pedal, which performs a speed change operation, and the pedal body extends forward and rearward from the rotating shaft, the pedal body is formed at a front end thereof with a front operating portion and at a rear end thereof with a rear operating portion, and at least one of the front operating portion and the rear operating portion includes an upwardly projecting tread surface.

Further, preferably the front operating portion and the rear operating portion, respectively, include a front tread surface and a rear tread surface, which project upward.

Still further, preferably the rear tread surface is positioned above the front tread surface when the shift pedal is disposed in a standby position before the treading operation is performed.

Preferably, the rear tread surface is inclined rearward and obliquely upward from the front tread surface when the shift pedal is disposed in a standby position before the treading operation is performed.

In order to provide a straddle-type vehicle having a simple construction to enable restricting of dispersion in feeling of operation to make the feeling of operation stable, there are provided a footrest 17a, on which a driver puts the sole, and a shift pedal (operating pedal) 19 arranged to be able to swing vertically about a transmission shaft (rotating shaft) 18 extending in a vehicle width direction, the shift pedal 19 including front and rear pedal bodies 19b, 19c connected to the transmission shaft 18 to extend forward and rearward and operating portions 20, 21, which are formed at the front and rear ends of the front and rear pedal bodies and on which the driver performs a treading operation in a state of putting the sole on the footrest 17a, the operating portions 20, 21 including tread surfaces 20a, 21 a projecting upward.

## Claims

1. Straddle-type vehicle comprising a footrest (17a), on which a driver can put at least a portion of a sole, and an operating pedal (19) vertically swingable about a rotating shaft (18) extending in width direction of the straddle-type vehicle, the operating pedal (19) comprising at least one pedal body (19b,19c) connected to the rotating shaft (18) and at least one operating portion (20,21) on which the driver can apply a treading operation when putting the sole on the footrest (17a), the operating portion (20,21) being arranged substantially at a swingable end of the pedal body (19b,19c), wherein the operating portion (20,21) includes a substantially upwardly projecting tread surface (20a,21 a).

2. Straddle-type vehicle according to claim 1, wherein the tread surface (20a,21 a) has a cross sectional shape which is substantially upwardly convex when being viewed in axial direction of the rotating shaft (18).

3. Straddle-type vehicle according to claim 1 or 2, wherein the tread surface (20a,21 a) has an upper portion which is substantially semi-circular.

4. Straddle-type vehicle according to claim 3, wherein the tread surface (20a,21 a) includes a plurality of substantially semi-circular portions, preferably having different radii of curvature.

5. Straddle-type vehicle according to one of claims 1 to 4, wherein the tread surface (20a,21a) includes an uppermost projecting apex (20a',21a') which is arranged substantially centrally on the tread surface (20a,21a) in longitudinal direction of the straddle-type vehicle.

6. Straddle-type vehicle according to one of claims 1 to 5, wherein the operating portion (20,21) includes at least one longitudinal wall portion (20b,21 b) which, preferably, extends downward from an outer edge of the tread surface (20a,21 a).

7. Straddle-type vehicle according to claim 6, wherein the tread surface (20a,21 a) and the longitudinal wall portion (20b,21b) are formed integrally, preferably, by press-forming a sheet material.

8. Straddle-type vehicle according to one of claims 1 to 7, wherein the pedal body (19b,19c) comprises a front pedal body (19b) extending forward from the rotating shaft (18) in longitudinal direction of the straddle-type vehicle and a rear pedal body (19c) extending rearward from the rotating shaft (18) in longitudinal direction of the straddle-type vehicle, the front pedal body (19b) having a front operating portion (20), and the rear pedal body (19c) having a rear operating portion (21), wherein at least one of the front operating portion (20) and the rear operating portion (21) includes the upwardly projecting tread surface (20a,21 a).

9. Straddle-type vehicle according to one of claims 1 to 8, wherein the operating pedal (19) is a shift pedal configured to perform a gear change.

10. Straddle-type vehicle according to claim 8 or 9, wherein the front operating portion (20) and the rear operating portion (21), respectively, include a front tread surface (20a) and a rear tread surface (21a), which project upward.

11. Straddle-type vehicle according to claim 10, wherein the rear tread surface (21 a) is positioned above the front tread surface (20a) when the operating pedal (19) is disposed in a standby position before the treading operation is performed.

12. Straddle-type vehicle according to claim 10 or 11, wherein the rear tread surface (21 a) is inclined rearward and obliquely upward with respect to the front tread surface (20a) when the operating pedal (19) is disposed in a standby position before the treading operation is performed.

13. Straddle-type vehicle according to one of claims 8 to 12, wherein the front pedal body (19b) and/or the rear pedal body (19c) is/are bent outwardly with regard to the rotating shaft (18) in width direction of the straddle-type vehicle.

14. Straddle-type vehicle according to one of claims 8 to 13, wherein the rear operating portion (21) has substantially the same shape as the front operating portion (20).

15. Straddle-type vehicle according to one of claims 1 to 14, wherein the tread surface (20a,21 a), preferably the front tread surface (20a), is positioned at the same height or below the footrest (17a) when the operating pedal (19) is disposed in a standby position before the treading operation is performed.
